# EUROPEAN PATENT APPLICATION

(11) **EP 3 974 172 A1**
(43) Date of publication of application: **30.03.2022**
(21) Application number: 21199330.8
(22) Date of filing: 28.09.2021
(51) Int. Cl.: B32B 1/08, B32B 25/08, B32B 25/14, B32B 27/08, B32B 27/32, B32B 27/34, F16L 11/04

(54) **COMPOSITION OF A MULTI-LAYER TUBE WITH A POLYAMIDE OUTER LAYER AND PROCESS FOR MAKING**

(30) Priority: 29.09.2020 US 202017037248
(71) Applicant: Cooper-Standard Automotive, Inc., Northville, MI 48168 (US)
(72) Inventor: NIE, Tao, Northville, 48168 (US); ZHANG, Yingping, Northville, 48168 (US); BENSKO, David Allen, Northville, 48168 (US)
(74) Representative: Crooks, Elizabeth Caroline

(57) **Abstract**

The present disclosure provides a multi-layer tube comprising a polyamide outer layer, a polyolefin intermediate layer and a thermoplastic elastomeric inner layer. The polyamide outer layer provides sufficient mechanical strength and the polyolefin intermediate layer shields the polyamide from contact with water to avoid hydrolytic degradation. The thermoplastic elastomeric inner layer guards against stress cracking in the polyolefin intermediate layer and provides an excellent seal for connection.

## Description

### FIELD

The present disclosure relates to a tube for use in a motor vehicle. More particularly, the present disclosure relates to a multi-layer tube which can be employed for transporting fluids for temperature control in a motor vehicle.

### BACKGROUND

Single and multi-layer tubes of synthetic materials such as plastics and elastomers have been proposed for coolant lines. Coolant lines for electrical and motor vehicles are growing in demand. Cooling systems for electrical vehicles and motor vehicles with internal combustion engines are similar. Both circulate coolant through a series of heat exchange pipes to transfer heat away from the engine.

Mid-temperature coolant systems operate at about 90 to about 120°C continuous temperature with a peak temperature of about 5 to about 10°C higher than the continuous temperature. It is important that a coolant tube be constructed of material that provides a barrier against coolant diffusion and leakage in the temperature range of operation. The tube must have good creep resistance in the operating temperature range and exhibit good hoop strength with connections to other tubes to avoid leaks developing at the stress points. The tube must also retain its burst pressure strength during operation while transporting coolant at higher pressure. Lastly, the tube should have adequate sealability for connection to components of the system or to other tubes often by means of a fitted connection including a barbed connection.

Finding a material that has all of these properties and is at the same time economical is a challenge. Multi-layer tubes can be useful to provide all the essential properties in a single tube. In general, the most successful multi-layer tubes have been co-extruded employing an outer layer composed of a material resistant to the exterior environment. The innermost layer is composed of a material which is chosen for its ability to block diffusion of coolant at low cost while exhibiting long-term serviceability.

Multi-layer coolant tubes made of a polyamide outer layer and a polyolefin inner layer have been utilized. Polyamide provides good mechanical and chemical properties including high burst strength at relatively higher temperatures. However, some polyamides may have relatively weak resistance to hydrolysis in coolant/water environment. The polyolefin inner layer protects the outer layer of polyamide from hydrolytic degradation by shielding it from water transported in the tube.

Polyolefin inner layers may have reduced creep stress cracking resistance. Polypropylene is reported to form microcracks that allow leakage of cooling fluid to the polyamide outer layer. The hydrolysis which then occurs reduces its bursting strength which can lead either to pipe failure or leaks at the connections.

It is an objective to provide a low-cost multi-layer tube that will transport fluids exceptionally in a motor vehicle at medium continuous temperature range.

### SUMMARY

The present disclosure provides a multi-layer tube 10 and a process for making it comprising a polyamide outer layer 18, a polyolefin intermediate layer 16 and a thermoplastic elastomeric inner layer 14. The polyamide outer layer 18 provides sufficient mechanical strength and environmental protection, the polyolefin intermediate layer 16 shields the polyamide from contact with water to avoid hydrolytic degradation and prevents the coolant diffusion and permeation. The thermoplastic elastomeric inner layer 14 acts as an excellent interface material to the aqueous coolant environment and guards against stress cracking in the polyolefin intermediate layer 16 and provides an excellent seal for connection.

### BRIEF DESCRIPTION OF THE DRAWINGS

One or more exemplary embodiments of the present invention will be described below in conjunction with the following drawing figure, in which:
FIG. 1 is a plan view of a tube having three layers according to the present disclosure;
FIG. 2 is a sectional view through a tube of FIG. 1;
FIG. 3 is a sectional view through an alternative embodiment of the tube of FIG. 2;
FIG. 4 is a schematic of a process for making the tube of the disclosure.

### DETAILED DESCRIPTION

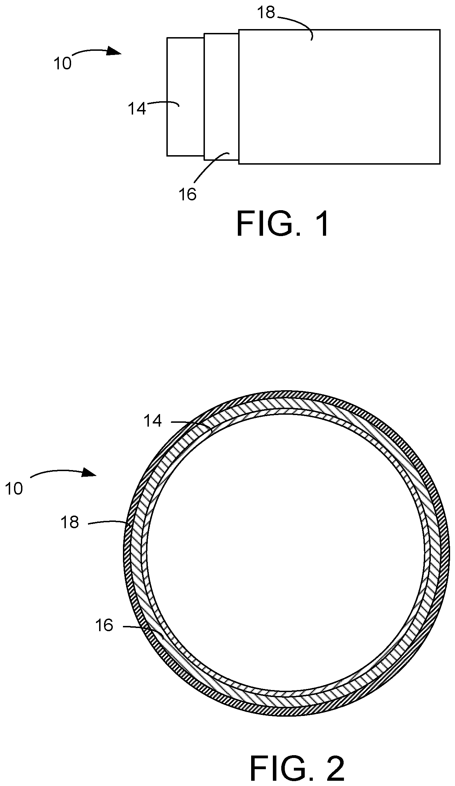

The present disclosure is a multi-layer tube 10 shown in FIGS. 1 and 2. The multi-layer tube is ideal for medium temperature coolant line applications but may be useful in other applications. The tube 10 has at least an inner or first layer 14, at least one intermediate or second layer 16, and at least a third or outer layer 18. The tube 10 may have a polyamide outer layer 18, a polyolefin intermediate layer 16 and a thermoplastic elastomeric inner layer 14. The polyamide outer layer 18 provides sufficient mechanical strength and the polyolefin intermediate layer 16 shields the polyamide from contact with water to avoid hydrolytic degradation. The present disclosure proposes a thermoplastic elastomeric inner layer 14 to guard against creep stress cracks in the polyolefin intermediate layer 16 and provide an excellent seal with connectors or other tubes.

The multi-layer tube 10 is, preferably, fabricated by simultaneously co-extruding thermoplastic materials in a conventional co-extrusion process. The tube 10 may either be co-extruded to a suitable length or may be co-extruded in continuous length and cut to fit the given application subsequently. The tube 10 of the present disclosure may have an outer diameter up to about 50 mm with an inner diameter of about 5 mm to about 30 mm. The total wall thickness may be from 0.5 to about 7 mm, suitably about 0.9 to about 4 mm, and preferably from 1 to about 3 mm. The tube may also have a smooth bore or a corrugated surface.

The tube 10 may be used for medium temperature coolant transport for motors in both electrical and internal combustion vehicles. Typically, the coolant will be an aqueous glycol-based coolant, such as ethylene glycol. The tube 10 may typically encounter about 90°C to about 120°C continuous temperature applications and a peak temperature of about 125°C to about 135°C temperature at about 1 to 4 bar maximum gauge pressure.

The tube 10 comprises an inner layer 14. The inner layer 14 may predominantly comprise a thermoplastic elastomeric material chosen for its flexibility and connection seal-ability. As used herein, the term "predominant" or "predominate" means greater than 50%, suitably greater than 75% and preferably greater than 90%. The inner layer 14 of the tube 10 can accommodate a friction fit connection such as a multi-barb male connector. The inner layer must have properties that sealingly conform around the multi-barb male connector inserted into the tube to establish a fluid-tight connection that endures over the life of the tube 10. The inner layer may have a wall thickness of about 0.1 to about 1 mm and preferably about 0.1 to about 0.7 mm.

A suitable material for the inner layer 14 is a thermoplastic elastomer (TPE). A TPE comprises a primary phase of thermoplastic with a secondary phase of an elastomer or a rubber. TPE has properties of thermoplastics but with hardness more like rubber. A TPE that adheres to the intermediate layer 16 is most suitable. Suitable TPE's include thermoplastic rubbers with a composition composed of a styrene-ethylene/butylene-styrene block copolymers and polyvinyl chloride compounds with plasticizers.

A preferred TPE is predominantly a thermoplastic vulcanizate (TPV). A TPV is a vulcanized alloy of mostly fully cured ethylene-propylene diene monomer (EPDM) particles encapsulated in a polypropylene matrix. The polypropylene matrix comprises the primary phase and the ethylene-propylene diene monomer comprises the secondary phase. TPV is commercially available from various suppliers including under the SANTOPRENE product line, a thermoplastic rubber composition, from ExxonMobil Chemical in Irving, Texas, and the SARLINK product line, an oil resistant thermoplastic composition commercially available from Teknor Apex of Pawtucket, Rhode Island. TPV is also available from Elastron Group which is manufactured in Kocaeli, Turkey. A preferred TPV should have a Shore A Hardness from about 55 to about 95, and preferably from about 80 to about 90 based on ISO 868. The thermoplastic, such as polypropylene, without a phase of EPDM will have a greater Shore A Hardness. If desired, these materials may be modified to include flame retardants, plasticizers and other similar additives.

In an embodiment, the intermediate layer 16 may predominantly comprise a melt processable, polyolefinic material. Polyolefinic materials provide a sufficient barrier to water to protect the polyamide outer layer 18 from hydrolysis. A suitable polyolefinic material is polypropylene. As such, the intermediate layer may predominantly comprise polypropylene. Polypropylene has excellent resistance to permeation. Polypropylene is particularly suitable if the inner layer 14 is a TPE with the primary phase comprising polypropylene for mutual adhesion properties. The polypropylene material may comprise a propylene homopolymer or a co-polymer of propylene. A polypropylene copolymer comprises a propylene polymerized with at least another alkene monomer. The other alkene monomer may be a substituted or unsubstituted alkene having no more than four carbon atoms, vinyl alcohol or vinyl acetate, and mixtures thereof. In a copolymer, the polypropylene is covalently bonded with the other alkene monomer in the polymer chain.

Polypropylene homopolymers or copolymers can be manufactured by any known process. For example, propylene polymers can be prepared from propene monomer in the presence of Ziegler-Natta catalyst systems or metallocene catalyst systems. Block copolymers can be manufactured similarly except propylene is generally first polymerized by itself or with another alkene monomer in the first reactor phase to form the semicrystalline matrix and low crystallinity or amorphous segments of propylene and the other alkene monomer are then copolymerized, in a second stage or subsequent stages, in the presence of the polymer produced in the first reactor. The other alkene monomer should have no more than four carbons and is preferably ethylene. Commercial polypropylene random and block copolymers are widely available from multiple polypropylene producers and encompass a wide range of grades. Random polypropylene copolymers are preferred.

Random copolymers of propylene can contain the comonomers inserted in a random manner so that the main chain crystallinity is disrupted, leading to drops in the melting point of the copolymer from about roughly 165°C for the homopolypropylene to as low as about 130°C in the random copolypropylene depending on the amount and type of comonomer employed.

The copolymers of polypropylene can be copolymerized in a multi-step process to obtain block copolypropylenes where chain segments consist of relatively crystalline homopolypropylene or random copolypropylene and chain segments of relatively amorphous or low crystallinity propylene ethylene copolymers. The melting points of the block copolymers will be dominated by the more crystalline segments of the copolymer to give a melting point of about 165°C for a homopolypropylene block copolymer or lower for a random copolypropylene block copolymer.

Ethylene is the preferred comonomer for a polypropylene copolymer, but other olefin monomers may be suitable. Additionally, random copolypropylene is preferred over block copolypropylene. The mass fraction of comonomer, particularly ethylene, in the propylene copolymer should be between about 0.1 and about 15 wt%, preferably between about 0.2 and about 6 wt%.

The multi-layer tube 10 may have an outer layer 18 predominantly comprising a polyamide. Polyamides which can be used are aliphatic homopolycondensates and copolycondensates, for example PA 46, PA 66, PA 68, PA 610, PA 612, PA 410, PA 810, PA 1010, PA 412, PA 1012, PA 1212, PA 6, PA 7, PA 8, PA 9, PA 10, PA 11 and PA 12. The designation of the polyamides corresponds to the international standard, with the first digit(s) indicating the number of carbon atoms in the starting diamine and the last digit(s) indicating the number of carbon atoms in the dicarboxylic acid. If only one number is given, this means that an α,ω-aminocarboxylic acid or the lactam derived therefrom has been used as starting material; otherwise, reference may be made to H. Domininghaus, Die Kunststoffe und ihre Eigenschaften, pages 272 ff, VDI-Verlag, 1976.

The use of aliphatic PA612 is particularly preferred since this polyamide has a high bursting strength at high use temperatures and secondly has satisfactory dimensional stability and excellent resistance to chemical attack from the environment. For example, PA612 can have a flexural modulus of 620 MPa at dry conditions. If copolyamides are used, these can comprise, for example, adipic acid, sebacic acid, suberic acid, isophthalic acid, terephthalic acid, naphthalene-2,6-dicarboxylic acid, etc., as coacid and bis(4-aminocyclohexyl)methane, trimethylhexamethylenediamine, hexamethylenediamine or the like as codiamine. Lactams such as caprolactam or laurolactam and aminocarboxylic acids such as 11-aminoundecanoic acid can likewise be incorporated as cocomponents.

Further suitable polyamides are mixed aliphatic/aromatic polycondensates. The polyamide composition can comprise either one of these polyamides or a plurality thereof as a mixture. Furthermore, up to 50 wt.% of other thermoplastics can be present as long as these do not impair the bonding capability. Further thermoplastics which may be present are, in particular, rubbers which increase the impact toughness, e.g. ethylene-propylene or ethylene-propylene-diene copolymers, polyolefins, polypentenylene, polyoctenylene, random or block copolymers of alkenylaromatic compounds with aliphatic olefins or dienes or core-shell rubbers having an elastic core of (meth)acrylate, butadiene or styrene-butadiene rubber having a glass transition temperature T_{g} of <―10° C, with the core being able to be crosslinked and the shell being able to be composed of styrene and/or methyl methacrylate and/or further unsaturated monomers.

The polyamide preferably has an excess of amino end groups, which generally results from a diamine being used as molecular weight regulator in the preparation. The excess of amino end groups can also be obtained by mixing a polyamide which is low in amino groups and a polyamide which is rich in amino groups. The ratio of amino end groups to carboxyl end groups should then be at least 51:49, preferably at least 55:45, particularly preferably at least 60:40 and in particular at least 70:30.

In addition, the polyamide can further comprise relatively small amounts of additives required for setting particular properties. Examples are pigments or fillers such as carbon black, titanium dioxide, zinc sulfide, silicates or carbonates, processing aids such as waxes, zinc stearate or calcium stearate, flame retardants such as magnesium hydroxide, aluminum hydroxide or melamine cyanurate, glass fibers, antioxidants, UV stabilizers and additives which give the product anti-electrostatic properties or electrical conductivity, e.g. carbon fibers, graphite fibrils, stainless steel fibers or conductive carbon black.

In a specific embodiment, the polyamide composition may contain from 1 to 25% by weight of plasticizer, particularly preferably from 2 to 20% by weight and in particular from 3 to 15% by weight. Customary compounds suitable as plasticizers are, for example, esters of p-hydroxybenzoic acid having from 2 to 20 carbon atoms in the alcohol component or amides of arylsulfonic acids having from 2 to 12 carbon atoms in the amine component, preferably amides of benzenesulfonic acid. Possible plasticizers are, for example, ethyl p-hydroxybenzoate, octyl p-hydroxybenzoate, i-hexadecyl p-hydroxybenzoate, N-n-octyltoluenesulfonamide, N-n-butylbenzenesulfonamide or N-2-ethylhexylbenzenesulfonamide. The outer layer 18 may have a wall thickness of about 0.1 to about 1 mm and preferably about 0.1 to about 0.8 mm.

The inner layer 14 may be co-extruded with the other layers during the extrusion process or other layers may be extruded around the inner layer in a subsequent process such as by crosshead extrusion. The outer layer 18 may be co-extruded with the other layers during the extrusion process or may be extruded around other layers in a subsequent process such as by crosshead extrusion.

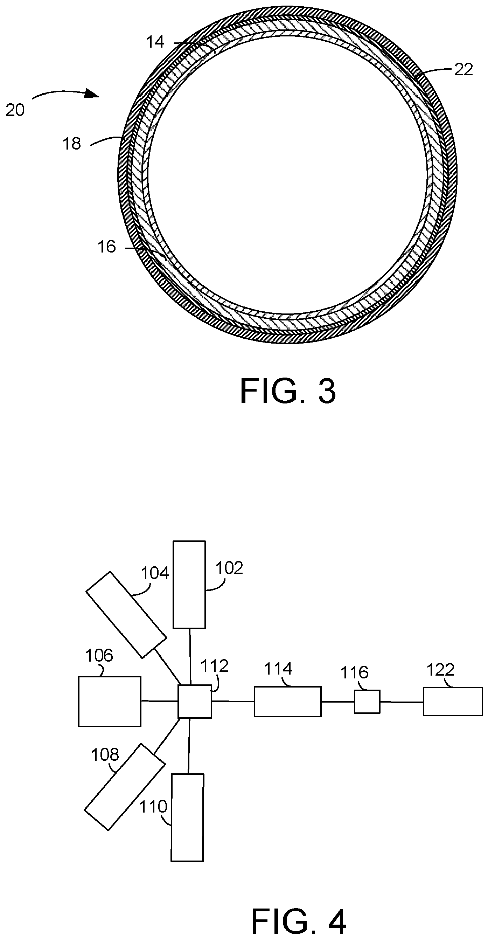

In order to get strong adhesion between the intermediate layer 16 comprising polyolefin and the outer layer 18 comprising a polyamide an adhesive layer may be employed. As shown in FIG. 3, the tube 20 may have an adhesive layer 22 interposed between the intermediate layer 16 and the outer layer 18. In one possible embodiment, the material of the intermediate layer 16 is adhesion-modified, e.g. by incorporation of acid anhydride groups. The material of the intermediate layer 16 may also be present as a mixture of an unmodified polypropylene type with a modified propylene type. In a second possible embodiment, the intermediate layer 16 is made up of two sublayers of which the one adjacent to the polyamide layer is adhesion-modified and the other does not have to be adhesion-modified. Apart from the adhesion modification, different polypropylene molding compositions can be used here as layer materials. In a further possible embodiment, an adhesive layer 22 having a different composition is located between the intermediate layer 16 and the outer layer 18. In this regard, polyamide/polypropylene blends, for example, in which at least part of the polypropylene component is adhesion-modified may be used.

No adhesive layer need be used between the intermediate layer 16 and the inner layer 14. We have found that an inner layer 14 of TPE, and particularly a TPV, may not require an adhesive layer and may be directly bonded to the intermediate layer 16 of polyolefin as shown in FIGS. 2 and 3. An inner layer 12 of TPE predominantly comprising polypropylene is particularly adhesive to an intermediate layer comprising predominantly comprising polypropylene. In an embodiment, a TPV with a primary phase predominantly comprising polypropylene and a secondary phase predominantly comprising EPDM bonds well to the intermediate layer 16 predominantly comprising polypropylene.

A higher comonomer propylene-α-olefin copolymer-based adhesive may be used as the adhesive layer 22. A suitable adhesive for the adhesive layer 22 can be a polypropylene based adhesive. A preferred polypropylene-based adhesive is an anhydride-modified polypropylene resin. Each adhesive layer 22 may have a wall thickness of about 0.05 to about 0.5 mm and preferably about 0.05 to about 0.2 mm.

The tube 10 of the present invention is suitable for use in motor vehicles and may comprise an outer layer 18 that is non-reactive with the external environment and can withstand various shocks, vibrational fatigues and changes in temperature, as well as exposure to various corrosive or degradative compounds to which it would be exposed through the normal course of operation of the motor vehicle. Suitable materials for use in the present invention may be composed of any melt-processible extrudable thermoplastic materials which are resistant to ultraviolet degradation, extreme changes in heat. The material of choice may also exhibit resistance to environmental hazards such as exposure to road salt, zinc chloride and CaCl₂, and resistance to degradation upon contact with materials such as engine oil and brake fluid.

Referring now to FIG. 4, there is shown a schematic diagram 100 of the process of producing the tube 10 of the present disclosure. The process comprises the step of simultaneously extruding at least the inner layer 14 comprising a thermoplastic elastomeric material, the intermediate layer 16 comprising a polyolefinic material around the inner layer and the outer layer 18 comprising a polyamide material around the intermediate layer. The extrusion is carried out via an extruder 102 for extruding polymeric material into a suitable tubing configuration comprising at least an inner layer 14, an intermediate layer 16 and an outer layer 18. One or fewer extruders 102, 104, 106, 108 and/or 110 may be used for each layer to be extruded. One or more adhesive layers may also be extruded between the intermediate layer 16 and the outer layer 18 and/or the inner layer 14 if necessary. It is to be understood that fewer or any number of extruders may be used as desired. If more than one extruder is used, the materials are then run through a co-extrusion head 112. The process then comprises the step of quenching via, for example, a water tank 114. The coextruded tube 10 is then sent through a puller 116, after which is it run through a cutter 122 which cuts the tube to desired lengths.

The multi-layer tube 10 has strong properties necessary for automotive coolant transport. The tube 10 is expected to withstand impact of 1.5 J (2 ft-lbs) of force at -40°C and exhibits a coolant permeation resistance better than traditional polyamide tubes. The tube 10 is capable of being made into a corrugated tube without delamination and has adequate resistance to burst pressures that it will encounter during typical operation and also withstand vacuum pressure that it will encounter during manufacturing and testing. The tube also has sufficient seal-ability and hoop strength to enable it to couple with a barbed connection without leakage.

While the following is described in conjunction with specific embodiments, it will be understood that this description is intended to illustrate and not limit the scope of the preceding description and the appended claims.

Without further elaboration, it is believed that using the preceding description that one skilled in the art can utilize the present invention to its fullest extent and easily ascertain the essential characteristics of this invention, without departing from the spirit and scope thereof, to make various changes and modifications of the invention and to adapt it to various usages and conditions. The preceding preferred specific embodiments are, therefore, to be construed as merely illustrative, and not limiting the remainder of the disclosure in any way whatsoever, and that it is intended to cover various modifications and equivalent arrangements included within the scope of the appended claims.

In the foregoing, all temperatures are set forth in degrees Celsius and, all parts and percentages are by weight, unless otherwise indicated.

### NUMBERED EMBODIMENTS

### Numbered Embodiment 1

A multi-layer tube comprising:
an inner layer comprising a thermoplastic elastomer;
an intermediate layer comprising polyolefin; and
an outer layer comprising a polyamide.

### Numbered Embodiment 2

The multi-layer tube of numbered embodiment 1 wherein the inner layer comprises a thermoplastic vulcanizate.

### Numbered Embodiment 3

The multi-layer tube of numbered embodiment 2 wherein the inner layer comprises a primary polypropylene phase and a secondary elastomeric phase.

### Numbered Embodiment 4

The multi-layer tube of numbered embodiment 3 wherein the secondary elastomeric phase comprises ethylene-propylene diene monomer rubber.

### Numbered Embodiment 5

The multi-layer tube of numbered embodiment 1 wherein the intermediate layer comprises polypropylene.

### Numbered Embodiment 6

The multi-layer tube of numbered embodiment 5 wherein the polypropylene is a homopolymer.

### Numbered Embodiment 7

The multi-layer tube of numbered embodiment 5 wherein the polypropylene is a copolymer.

### Numbered Embodiment 8

The multi-layer tube of numbered embodiment 7 wherein the polypropylene copolymer includes an ethylene copolymer.

### Numbered Embodiment 9

The multi-layer tube of numbered embodiment 1 further comprising an adhesive layer between the intermediate layer and the outer layer.

### Numbered Embodiment 10

The multi-layer tube of numbered embodiment 8 wherein said adhesive layer is a polypropylene based adhesive.

### Numbered Embodiment 11

The multi-layer tube of numbered embodiment 1 wherein the outer layer is nylon 612, 610 or 12.

### Numbered Embodiment 12

A multi-layer tube comprising:
an inner layer comprising a thermoplastic elastomer;
an intermediate layer comprising polypropylene; and
an outer layer comprising a polyamide.

### Numbered Embodiment 13

The multi-layer tube of numbered embodiment 11 wherein at least one of the inner layer and the intermediate layer comprises polypropylene copolymer.

### Numbered Embodiment 14

The multi-layer tube of numbered embodiment 12 wherein the inner layer comprises a polypropylene copolymer primary phase and an elastomeric secondary phase.

### Numbered Embodiment 15

The multi-layer tube of numbered embodiment 14 wherein the secondary elastomeric phase comprises ethylene-propylene diene monomer rubber.

### Numbered Embodiment 16

The multi-layer tube of numbered embodiment 12 wherein the intermediate layer comprises a propylene copolymer with an ethylene copolymer.

### Numbered Embodiment 17

The multi-layer tube of numbered embodiment 1 wherein the outer layer is nylon 612, 610 or 12.

### Numbered Embodiment 18

A process for making a multi-layer tube comprising:
extruding an inner layer comprising a thermoplastic elastomer, an intermediate layer comprising polyolefin around the inner layer, and an outer layer comprising a polyamide around the intermediate layer; wherein all the layers are extruded simultaneously.

### Numbered Embodiment 19

The process of numbered embodiment 20 further comprising simultaneously extruding an adhesive layer between the intermediate layer and the outer layer.

### Numbered Embodiment 20

The process of numbered embodiment 20 wherein the inner layer is a thermoplastic vulcanizate.

## Claims

1. A multi -layer tube comprising:
an inner layer comprising a thermoplastic elastomer;
an intermediate layer comprising polyolefin; and
an outer layer comprising a polyamide.

2. The multi-layer tube of claim 1 wherein the inner layer comprises a thermoplastic vulcanizate.

3. The multi-layer tube of claim 2 wherein the inner layer comprises a primary polypropylene phase and a secondary elastomeric phase; optionally
wherein the secondary elastomeric phase comprises ethylene-propylene diene monomer rubber.

4. The multi-layer tube of claim 1 wherein the intermediate layer comprises polypropylene.

5. The multi-layer tube of claim 4 wherein the polypropylene is a homopolymer; or wherein the polypropylene is a copolymer; optionally
wherein the polypropylene copolymer includes an ethylene copolymer.

6. The multi-layer tube of claim 1 further comprising an adhesive layer between the intermediate layer and the outer layer; optionally
wherein said adhesive layer is a polypropylene based adhesive.

7. The multi-layer tube of claim 1 wherein the outer layer is nylon 612, 610 or 12.

8. A multi-layer tube comprising:
an inner layer comprising a thermoplastic elastomer;
an intermediate layer comprising polypropylene; and
an outer layer comprising a polyamide.

9. The multi-layer tube of claim 8 wherein at least one of the inner layer and the intermediate layer comprises polypropylene copolymer.

10. The multi-layer tube of claim 8 wherein the inner layer comprises a polypropylene copolymer primary phase and an elastomeric secondary phase; optionally
wherein the secondary elastomeric phase comprises ethylene-propylene diene monomer rubber.

11. The multi-layer tube of claim 8 wherein the intermediate layer comprises a propylene copolymer with an ethylene copolymer.

12. The multi-layer tube of claim 8 wherein the outer layer is nylon 612, 610 or 12.

13. A process for making a multi-layer tube comprising:
extruding an inner layer comprising a thermoplastic elastomer, an intermediate layer comprising polyolefin around the inner layer, and an outer layer comprising a polyamide around the intermediate layer; wherein all the layers are extruded simultaneously.

14. The process of claim 13 further comprising simultaneously extruding an adhesive layer between the intermediate layer and the outer layer.

15. The process of claim 13 wherein the inner layer is a thermoplastic vulcanizate.
